# EUROPÄISCHE PATENTSCHRIFT

(11) **EP 0 569 713 B1**
(45) Veröffentlichungstag und Bekanntmachung des Hinweises auf die Patenterteilung: **13.12.1995**
(21) Anmeldenummer: 93105930.7
(22) Anmeldetag: 13.04.1993
(51) Int. Cl.: F24D 3/08, F24D 19/10

(54) **Gasbeheizter Wassererhitzer für Raumheizung und Brauchwasserbereitung**
Gas fired water heater for room heating and production of hot water for domestic use
Chauffe-eau à gaz pour le chauffage de locaux et pour la préparation d'eau sanitaire

(30) Priorität: 15.05.1992 DE 4216039
(43) Veröffentlichungstag der Anmeldung: 18.11.1993
(73) Patentinhaber: ROBERT BOSCH GMBH, 70442 Stuttgart (DE)
(72) Erfinder: Oehrlein, Manfred, Dipl.-Ing. (FH), W-7314 Wernau (DE)

(56) Entgegenhaltungen:
- EP-A- 0 460 399
- EP-A- 0 529 353
- DE-C- 4 018 929

## Beschreibung

### Stand der Technik

Die Erfindung geht aus von einem gasbeheizten Wassererhitzer nach der Gattung des Hauptanspruchs. Bei bekannten Wassererhitzern dieser Gattung ist die in den Rücklaufstrang des internen Leitungssystems eingebaute Umwälzpumpe mit nur einem Druckausgang versehen und das im Brauchwasserbereitungsbetrieb einen internen Kurzschlußkreis herstellende Dreiwege-Umschaltventil durch motorische bzw. elektromagnetische Hilfsenergie gesteuert. Diese Anordnung erfordert zusätzliche elektrische Leitungen zum Dreiwege-Umschaltventil, welches zudem verhältnismäßig voluminös ist und einen größeren Einbauraum benötigt, der in Geräten der gattungsmäßigen Art nur knapp bemessen ist. Ferner ist es bekannt, in gasbeheizten Wassererhitzern für Raumheizung und Brauchwasserbereitung im Vorlaufstrang des internen Leitungssystems eine Umwälzpumpe mit zwei umschaltbaren Druckausgängen vorzusehen (EP-A 0 460 399), von denen der eine mit dem Vorlaufanschluß für das Heizungsnetz und der andere mit einer über einen Wärmeübertrager für die Brauchwasserbereitung zum Rücklaufstrang führenden Zweigleitung verbunden ist. Bei dieser Anordnung ersetzt zwar die Umwälzpumpe das Dreiwege-Umschaltventil, jedoch ist der Wärmeübertrager an die Saugseite der Umwälzpumpe angeschlossen, so daß es zu einem erhöhten Auftreten von Siedegeräuschen im Wärmeübertrager kommen kann.

### Vorteile der Erfindung

Die erfindungsgemäße Anordnung mit den kennzeichnenden Merkmalen des Hauptanspruchs hat den Vorteil, daß ebenfalls ein durch Hilfsenergie gesteuertes Dreiwege-Umschaltventil entfällt, wobei jedoch der Wärmeübertrager an die Druckseite der Umwälzpumpe angeschlossen ist und dadurch Siedegeräusche verursachende Druckzustände im Wärmeübertrager vermieden werden. Die beiden lediglich auf hydraulische Strömungskräfte im internen Leitungssystem ansprechenden Umschaltventile benötigen keine Hilfsantriebe mit zusätzlichen, frei zu verlegenden Steuerleitungen, so daß sie sehr kompakt ausgeführt sein können und eine leichtere Montage des Gerätes ermöglichen.

Die Unteransprüche enthalten Merkmale zur vorteilhaften Ausgestaltung und Weiterbildung der Anordnung nach dem Hauptanspruch.

Eine kostensparende Ausführung ergibt sich, wenn die beiden Umschaltventile als einfache Klappenventile ausgeführt sind.

Bei einer bevorzugten Ausführungsform ist das im Rücklaufstrang angeordnete Umschaltventil als Wirbelkammerventil ausgebildet, das gemäß den Merkmalen des Anspruchs 3 in das interne Leitungssystem eingebaut ist. Das Wirbelkammerventil steuert den Bypass der Umwälzpumpe so, daß im Heizungsnetz ein konstanter Wasserdruck aufrechterhalten bzw. ein vorgegebener Höchstwert des Wasserdruckes nicht überschritten wird. Das Wirbelkammerventil übt daher zusätzlich die Funktion eines erhöhte Strömungsgeräusche im Heizungsnetz vermeidenden Überströmventiles aus, das in bekannten Wassererhitzern der gattungsmäßigen Art als ein zusätzliches Ventilelement, beispielsweise als Rückschlagventil in einer Vorlauf- und Rücklaufstrang verbindenden Zweigleitung ausgeführt ist.

### Zeichnung

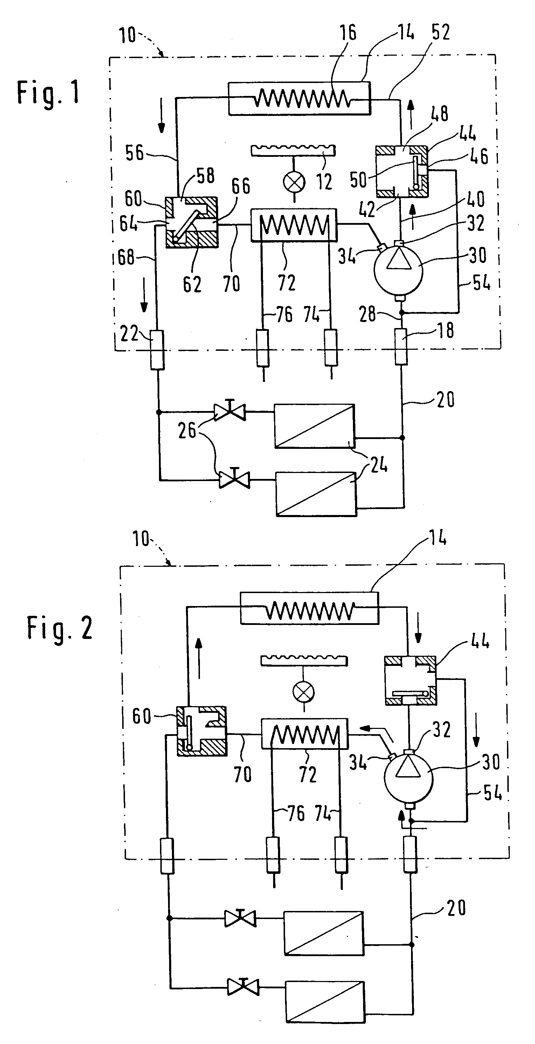

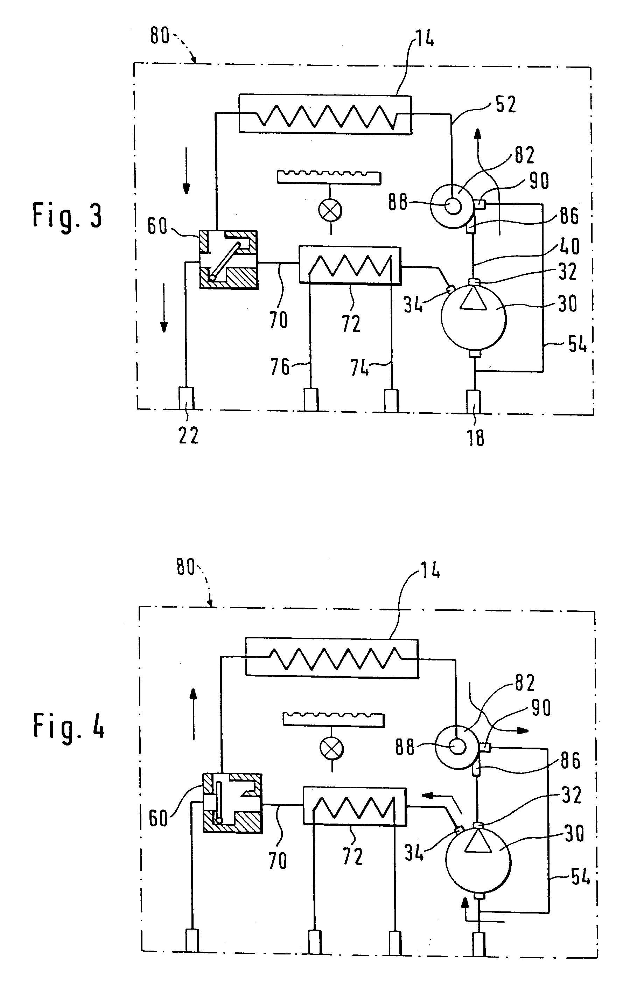

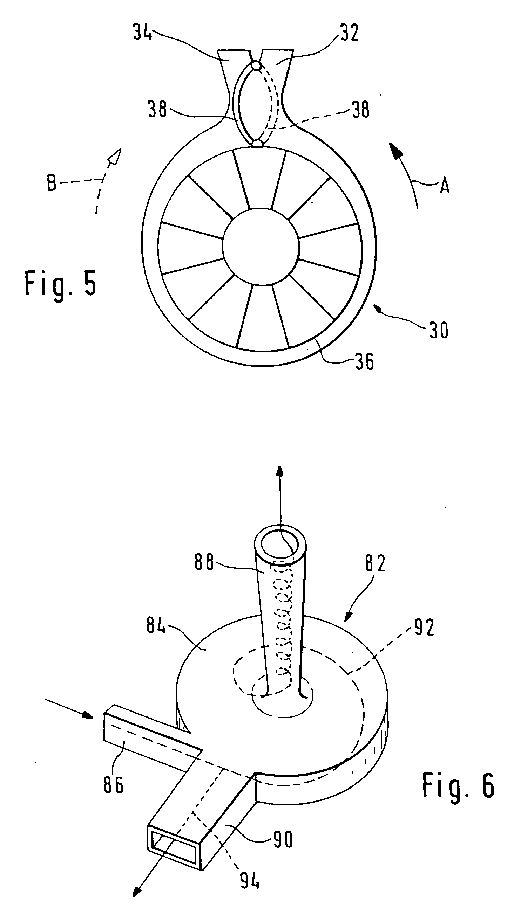

Zwei Ausführungsbeispiele der Erfindung sind in der Zeichnung schematisch dargestellt und in der nachfolgenden Beschreibung näher erläutert. Es zeigen die Figuren 1 und 2 eine Warmwasser-Zentralheizungsanlage mit einem Wassererhitzer nach dem ersten Ausführungsbeispiel, in den Betriebszuständen "Heizen" und "Warmwasserbereiten", die Figuren 3 und 4 einen Wassererhitzer nach dem zweiten Ausführungsbeispiel, ebenfalls in den beiden Betriebszuständen, Figur 5 stark vereinfacht einen Schnitt durch das Gehäuse der Umwälzpumpe des Wassererhitzers nach den Figuren 1 bis 4 und Figur 6 perspektivisch ein Ventil des Wassererhitzers nach den Figuren 3 und 4.

### Beschreibung der Ausführungsbeispiele

Die Zentralheizungsanlage nach Figur 1 hat einen durch einen strichpunktierten Linienzug umrandeten Wassererhitzer 10, der mit einem Gasbrenner 12 als Heizquelle versehen ist. Über dem Gasbrenner 12 ist ein von den Verbrennungsgasen beaufschlagter Wärmeübertrager 14 angeordnet, der aus einem Lamellenblock mit hindurchgeführter Wasserrohrschlange 16 besteht. Diese ist in ein internes Leitungssystem des Wassererhitzers 10 eingefügt, welches einen Rücklaufanschluß 18 für ein externes Heizungsnetz 20 mit einem Vorlaufanschluß 22 verbindet. Das Heizungsnetz 20 führt über mehrere parallel zueinander geschaltete Heizkörper 24, die je von einem Thermostatventil 26 gesteuert sind.

Das interne Leitungssystem des Wassererhitzers 10 hat einen ersten Rücklaufstrang 28, der vom Rücklaufanschluß 18 zum Sauganschluß einer Umwälzpumpe 30 führt. Diese ist mit einem drehrichtungsumkehrbaren Antrieb und mit zwei Druckanschlüssen 32, 34 versehen, von denen der eine in der einen Drehrichtung und der andere in der zweiten Drehrichtung des Pumpenrades 36 aktiviert ist. Die wechselseitige Aktivierung der Druckanschlüsse 32, 34 kann beispielsweise gemäß Figur 5 durch eine elastisch verformbare Ventilklappe 38 gesteuert sein, die in Drehrichtung A des Pumpenrades 36 den Druckanschluß 32 freigibt und den Druckanschluß 34 verschließt. In der anderen Drehrichtung B nimmt die Ventilklappe 38 die mit Strichlinien angedeutete Stellung ein, in welcher nur der Druckanschluß 34 geöffnet ist.

Der Druckanschluß 32 ist über einen zweiten Rücklaufstrang 40 mit dem einen Anschluß 42 eines Dreiwege-Umschaltventils 44 verbunden, welches mit zwei weiteren Anschlüssen 46 und 48 versehen ist. Das Umschaltventil 44 ist als Klappenventil ausgebildet, dessen Ventilklappe 50 ohne äußere Beeinflussung lediglich durch Strömungskräfte in zwei Endstellungen bewegbar ist. In Drehrichtung A des Pumpenrades 36 ist die Ventilklappe 50 in die in Figur 1 dargestellte Lage gedrückt, in der sie den Anschluß 46 sperrt und den Anschluß 48 freigibt. Dieser ist über einen dritten Rücklaufstrang 52 mit dem Eingang des Wärmeübertragers 14 verbunden. Vom Anschluß 46 führt eine Zweigleitung 54 zum ersten Rücklaufstrang 28 zurück.

Der Ausgang des Wärmeübertragers 14 ist über einen ersten Vorlaufstrang 56 mit dem einen Anschluß 58 eines Dreiwege-Umschaltventils 60 verbunden, das ebenfalls als rein hydraulisch arbeitendes Klappenventil ausgebildet ist und keine externe Ansteuerung benötigt. Das Umschaltventil 60 ist mit einer Ventilklappe 62 versehen, die je nach Stellung einen Durchgang vom Anschluß 58 zu einem Anschluß 64 oder zu einem Anschluß 66 verstellt. In Drehrichtung A des Pumpenrades 36 ist die Ventilklappe 62 in die in Figur 1 dargestellte Lage gedrückt, in welcher das Umschaltventil 60 den ersten Vorlaufstrang 56 mit einem zweiten Vorlaufstrang 68 verbindet, der zum Vorlaufanschluß 22 führt.

Der Anschluß 66 des Umschaltventils 60 ist über eine Zweigleitung 70 mit dem zweiten Druckanschluß 34 der Umwälzpumpe 30 verbunden. Die Zweigleitung 70 führt über einen Wärmeübertrager 72, der zur Erwärmung von Brauchwasser in einer Brauchwasserleitung 74, 76 dient. Die Brauchwassererwarmung könnte jedoch auch im Wärmeübertrager 14 selbst in einer zusätzlichen Rohrschlange erfolgen, welche von der Wasserrohrschlange 16 konzentrisch umgeben ist. In diesem Fall erübrigt sich der Wärmeübertrager 72 in der Zweigleitung 70, die dann den Anschluß 66 des Umschaltventils 60 unmittelbar mit dem Druckanschluß 34 der Umwälzpumpe 30 verbinden würde.

Im Betriebszustand "Heizen" arbeitet die Umwälzpumpe 30 in Drehrichtung A, wobei die Ventilklappen 50 und 62 unter dem Einfluß der Strömungskräfte die in Figur 1 dargestellten Lagen einnehmen. In diesen Lagen fördert die Umwälzpumpe 30 das Wasser in Richtung der eingezeichneten Strömungspfeile vom Rücklaufanschluß 18 über den Wärmeübertrager 14 zum Vorlaufanschluß 22, wobei die Zweigleitungen 54 und 70 gesperrt sind und eine Brauchwassererwärmung nicht stattfindet. Im Betriebszustand "Brauchwasserbereiten" hat eine von der Strömung in der Brauchwasserleitung betätigte, in der Zeichnung nicht dargestellte Steuereinrichtung die Umwälzpumpe 30 in die Drehrichtung B umgeschaltet, wonach deren Ventilklappe 38 den Druckanschluß 32 gesperrt und den Druckanschluß 34 geöffnet hat. In diesem Betriebszustand ergibt sich der in Figur 2 durch die Strömungspfeile gekennzeichnete, das Heizungsnetz umgehende Kurzschlußkreis, der von der Umwälzpumpe 30 über die den Wärmeübertrager 72 durchsetzende Zweigleitung 70, das Umschaltventil 60, den Wärmeübertrager 14, das Umschaltventil 44 und die Zweigleitung 54 zurück zur Saugseite der Umwälzpumpe 30 führt.

Beim Ausführungsbeispiel nach den Figuren 3 und 4 hat ein Wassererhitzer 80 im wesentlichen den gleichen Aufbau wie der Wassererhitzer 10, so daß funktionsgleiche Teile mit den gleichen Bezugszahlen wie in den Figuren 1 und 2 bezeichnet sind Der Wassererhitzer 80 unterscheidet sich vom vorbeschriebenen Ausführungsbeispiel jedoch dadurch, daß anstelle des Umschaltventils 44 ein Wirbelkammerventil 82 zwischen Umwälzpumpe 30 und Wärmeübertrager 14 vorgesehen ist. Das in Figur 6 näher dargestellte Wirbelkammerventil 82 übt neben seiner Umschaltfunktion als Dreiwegeventil zusätzlich die Funktion eines Überströmventils aus, welches den Wasserdruck im Heizungsnetz konstant hält bzw. ein Überschreiten des Wasserdrucks über einen vorgegebenen Höchstwert verhindert, wenn in der Betriebsart "Heizen" die Strömungswiderstände im Heizungsnetz 20 ansteigen bzw. einen vorgegebenen Höchstwert erreichen.

Das Wirbelkammerventil 82 hat eine kreiszylindrische Wirbelkammer 84, in welche ein Eingangsstutzen 86 tangential einmündet, der über einen Rücklaufstrang 40 mit dem Druckanschluß 32 der Umwälzpumpe 30 verbunden ist. An zentraler Stelle mündet ein Ausgangsstutzen 88 aus der Wirbelkammer 84 aus, an den der Eingang des Wärmeübertragers 14 angeschlossen ist. Ferner ist das Wirbelkammerventil 82 mit einem zweiten Ausgangsstutzen 90 versehen, der neben der Einmündung des tangentialen Eingangsstutzens 86 radial aus der Wirbelkammer 84 ausmündet. Das Wirbelkammerventil 82 arbeitet in dem in Figur 3 durch die Strömungspfeile gekennzeichneten Betriebszustand "Heizen" wie folgt:
Bei hohem Wärmebedarf, das heißt bei geöffneten Thermostatventilen und daher geringen Strömungswiderständen im Heizungsnetz, kann eine große Wassermenge aus dem Ventil zum Vorlaufanschluß 22 abfließen. Das führt dazu, daß die über den Eingangsstutzen 86 tangential einströmende Wassermenge in der Wirbelkammer 84 und dem axialen Ausgangsstutzen 88 einen kräftigen, in Figur 6 durch die strichlinierte Linie angedeuteten Strömungswirbel 92 aufbauen kann. Dieser ist in der Lage, den radialen Ausgangsstutzen 90 und damit die zur Saugseite der Umwälzpumpe 30 führende Zweigleitung 54 fast vollständig abzusperren, so daß praktisch die gesamte Pumpenfördermenge über den Wärmeübertrager 14 in das Heizungsnetz gelangt.

Mit abnebmendem Wärmebedarf, das heißt teilweise geschlossenen Thermostatventilen und größeren Strömungswiderständen im Heizungsnetz, stellt sich in der Wirbelkammer 84 ein Übergangszustand ein. Der Strömungswirbel 92 gibt jetzt in Abhängigkeit vom Übergangsverhalten der jeweiligen Ventilauslegung und abhängig vom jeweiligen Strömungswiderstand im axialen Ausgangsstutzen 88 den radialen Ausgangsstutzen 90 mehr oder weniger frei, Durch diesen fließt eine durch die punktierte Linie angedeutete Teilmenge 94 des Wassers über die Zweigleitung 54 zur Saugseite der Umwälzpumpe 30 zurück. Auf diese Weise wird verhindert, daß der Wasserdruck im Heizungsnetz auf Werte ansteigt, bei denen störende Strömungsgeräusche auftreten können.

In der Betriebsart "Warmwasserbereiten" fördert die Umwälzpumpe 30 das Wasser gemäß den Strömungspfeilen in Figur 4 über die Zweigleitung 70, das Umschaltventil 60 und den Wärmeübertrager 14 zum Wirbelkammerventil 82, wo es durch den Ausgangsstutzen 88 in die Wirbelkammer 84 gelangt. Aus dieser kann das Wasser nur über den radialen Ausgangsstutzen 90 heraustreten, weil der nichtaktivierte Druckanschluß 32 der Umwälzpumpe 30 ein Abströmen über den Eingangsstutzen 86 des Wirbelkammerventils 84 verhindert. Der interne Kurzschlußkreis wird durch die Zweigleitung 54 geschlossen, über die das Wasser aus dem Wirbelkammerventil 82 zur Saugseite der Umwälzpumpe 30 zurückströmt.

## Patentansprüche

1. Gasbeheizter Wassererhitzer für Raumheizung und Brauchwasserbereitung, mit einem Vorlauf- und einem Rücklaufanschluß (22, 18) für ein Warmwasser-Heizungsnetz (20) und einem beide Anschlüsse miteinander verbindenden internen Leitungssystem, das einen Wärmeübertrager (14), eine Umwälzpumpe (30) und ein Dreiwege-Umschaltventil enthält, welches im Brauchwasserbereitungsbetrieb die Verbindung zwischen Vorlaufanschluß (22) und Rücklaufanschluß (18) unterbricht und einen die Umwälzpumpe (30) einbeziehenden internen Kurzschlußkreis herstellt, gekennzeichnet durch folgende Merkmale:
a) die Umwälzpumpe (30) hat zwei umschaltbare Druckanschlüsse (32, 34) und ist mit ihrem einen Durchgang in den vom Rücklaufanschluß (18) zum Wärmeübertrager (14) führenden Rücklaufstrang (28, 40, 52) des internen Leitungssystems eingebaut,
b) das Dreiwege-Umschaltventil ist als ein auf Strömungskräfte im internen Leitungssystem ansprechendes fluidisches Ventil (60), vorzugsweise als Klappenventil ausgebildet und im Vorlaufstrang (56, 68) des internen Leitungssytems an der Abzweigstelle einer zum zweiten Druckanschluß (34) der Umwälzpumpe (30) führenden Zweigleitung (70) angeordnet,
c) im Rücklaufstrang (28, 40, 52) ist zwischen Umwälzpumpe (30) und Wärmeübertrager (14) ein zweites, lediglich auf hydraulische Kräfte ansprechendes Dreiwege-Umschaltventil (44 bzw. 82) angeordnet, welches bei Brauchwasserbereitung den rücklaufseitigen Anschluß des Wärmeübertragers (14) über eine die Umwälzpumpe (30) umgehende Zweigleitung (54) mit deren Saugseite verbindet.

2. Wassererhitzer nach Anspruch 1, dadurch gekennzeichnet, daß das im Rücklaufstrang (28, 40, 52) angeordnete Dreiwege-Umschaltventil (44 bzw. 82) als Klappenventil ausgebildet ist.

3. Wassererhitzer nach Anspruch 1, dadurch gekennzeichnet, daß das im Rücklaufstrang (28, 40, 52) angeordnete Dreiwege-Umschaltventil (82) als Wirbelkammerventil ausgebildet ist, das wie folgt in das interne Leitungssystem eingebaut ist:
a) Der tangentiale Eingang (86) ist mit dem einen Druckanschluß (32) der Umwälzpumpe (30) verbunden,
b) der axiale Ausgang (88) ist an den rücklaufseitigen Eingang des Wärmeübertragers (14) angeschlossen,
c) der radiale Ausgang ist über die Zweigleitung (54) mit der Saugseite der Umwälzpumpe (30) verbunden.

## Claims

1. Gas-fired water heater for room heating and production of hot water for domestic use, having a feed and return connection (22, 18) for a hot-water heating network (20) and an internal line system which connects both connections and contains a heat exchanger (14), a circulating pump (30) and a three-way reversing valve which, during operation for producing hot water for domestic use, interrupts the connection between feed connection (22) and return connection (18) and produces an internal short circuit including the circulating pump (30), characterized by the following features:
a) the circulating pump (30) has two reversible pressure connections (32, 34) and is fitted with its one passage in the return run (28, 40, 52), leading from the return connection (18) to the heat exchanger (14), of the internal line system,
b) the three-way reversing valve is designed as a fluid valve (60), preferably as a flap valve, responding to flow forces in the internal line system, and is arranged in the feed run (56, 68) of the internal line system at the branch-off point of a branch line (70) leading to the second pressure connection (34) of the circulating pump (30),
c) a second three-way reversing valve (44 or 82) responding only to hydraulic forces is arranged in the return run (28, 40, 52) between circulating pump (30) and heat exchanger (14), which second three-way reversing valve (44 or 82), during production of hot water for domestic use, connects the return-side connection of the heat exchanger (14) to the suction side of the circulating pump (30) via a branch line (54) bypassing the circulating pump (30).

2. Water heater according to Claim 1, characterized in that the three-way reversing valve (44 or 82) arranged in the return run (28, 40, 52) is designed as a flap valve.

3. Water heater according to Claim 1, characterized in that the three-way reversing valve (82) arranged in the return run (28, 40, 52) is designed as a swirl-chamber valve which is fitted in the internal line system as follows:
a) the tangential inlet (86) is connected to the one pressure connection (32) of the circulating pump (30),
b) the axial outlet (88) is connected to the return-side inlet of the heat exchanger (14),
c) the radial outlet is connected via the branch line (54) to the suction side of the circulating pump (30).

## Revendications

1. Chauffe-eau à gaz pour chauffage domestique et préparation d'eau chaude sanitaire, avec un raccord d'alimentation et un raccord de retour (22, 18) pour un circuit de chauffage à eau chaude (20), et un système de canalisations internes reliant entre eux les deux raccords, système qui comprend un échangeur de chaleur (14), une pompe de circulation (30) et une vanne d'inversion à trois voies qui interrompt, dans le mode de fonctionnement en préparation d'eau chaude sanitaire, la liaison entre le raccord d'alimentation (22) et le raccord de retour (18) et établit un court-circuit interne comprenant la pompe de circulation (30), chauffe-eau caractérisé en ce que :
a) la pompe de circulation (30) a deux raccords sous pression inversables (32, 34) et est montée avec sa ligne de retour (28, 40, 52) dans le système de canalisations internes qui établit un passage menant du raccord de retour (18) à l'échangeur de chaleur (14),
b) la vanne d'inversion à trois voies est constituée sous la forme d'une vanne fluidique (60) qui réagit aux forces d'écoulement dans le système de canalisations internes et est disposée dans la ligne d'alimentation (56, 68) du système de canalisations internes au point de dérivation d'une conduite de dérivation (70) qui va au deuxième raccord sous pression (34) de la pompe de circulation (30),
c) dans la ligne de retour (28, 40, 52), on dispose entre la pompe de circulation (30) et l'échangeur de chaleur (14) une deuxième vanne d'inversion à trois voies (44 ou 82) qui réagit uniquement aux forces hydrauliques, vanne qui lors de la préparation de l'eau chaude sanitaire, relie par son côté aspiration le raccord situé du côté retour de l'échangeur de chaleur (14), au moyen d'une dérivation (54) qui contourne la pompe de circulation (30).

2. Chauffe-eau selon la revendication 1, caractérisé en ce que la vanne d'inversion à trois voies (44 ou 82) disposée dans la ligne de retour (28, 40, 52) est constituée sous la forme d'une vanne à clapet.

3. Chauffe-eau selon la revendication 1, caractérisé en ce que la vanne d'inversion à trois voies (82) disposée dans la ligne de retour (28, 40, 52) est constituée sous la forme d'une vanne à chambre de tourbillonnement qui est montée dans le système de canalisations internes de la façon suivante :
a) l'entrée tangentielle (86) est reliée à l'un des raccords sous pression (32) de la pompe de circulation (30),
b) la sortie axiale (88) est raccordée à l'entrée située du côté retour de l'échangeur de chaleur (14),
c) la sortie radiale est reliée, via la dérivation (54), au côté aspiration de la pompe de circulation (30).
